# EUROPEAN PATENT APPLICATION

(11) **EP 2 182 123 A2**
(43) Date of publication of application: **05.05.2010**
(21) Application number: 10000549.5
(22) Date of filing: 23.12.2008
(51) Int. Cl.: E03C 1/266

(54) **Drier for food waste disposal system**

(30) Priority: 31.12.2007 KR 20070141315; 31.12.2007 KR 20070141316; 31.12.2007 KR 20070141317
(62) Divisional of application: 08022410.8
(71) Applicant: Woongjin Coway Co., Ltd., Gongju-si Chungcheongnam-do 314-895 (KR)
(72) Inventor: Lee, Kwang Jae, Anyang-si Gyeonggi-do 430-819 (KR); Kim, Sung Jin, Seoul 151-050 (KR)
(74) Representative: Kador & Partner

(57) **Abstract**

A drier for food waste disposal system, comprises a hollow drum (210) having a charge port (212) into which the dehydrated food waste can be charged and a discharge port (214) for which dried food waste can be discharged. An agitating screw 8220) has at least one hook shaped, an end of which is crooked and an outer edge of which is sharply formed, and a rotating shaft (225) around which a rotating thread (223) is disposed. The screw (220) is rotably disposed in an inner space of the drum (210), which agitates and crushes the dehydrated food waste charged into the drum. A motor (230) is installed on a first end of the drum (210) and provides a rotating force to the agitating screw the motor (230) been coupled to the agitating screw (220). A heater (214) is installed on an outer surface of the drum which when powered provides high-temperature heat for the inner space of the drum thereby drying the food waste.

## Description

### BACKGROUND OF THE INVENTION

### Field of the invention

The present invention relates, in general, to a drier for a food waste disposal system according to the preamble of claim 1.

### Description of the Related Art

In general, food waste is processed by fermentation, incineration, recycling into animal feed and fertilizer (compost), burial in the ground, and so on. These methods not only require large-scale facilities but also give rise to various side effects such as offensive odors and inconvenient collection, transportation and storage as well as the serious social problem of environmental pollution.

Thus, there is an urgent demand for a method to reduce environmental pollution attributable to food waste and recycling of the food waste.

Meanwhile, although the total number of households in Korea has reached ten million at present, countermeasures for food waste disposal methods associated with environmental pollution and their effects are still unsatisfactory. This is mainly attributable to housewives who have an insufficient grasp of the wasting of resources and environmental pollution. Accordingly, in order not only to inhibit generation of food waste but also to efficiently recycle it, it is essentially necessary to develop a household food processing system capable of coping with such problems.

Generally, a food waste disposal apparatus which is connected to a kitchen sink of the household is configured to remove moisture from the food waste via a series of processes such as dehydrating, cutting and drying, to thus reduce a volume of the food waste, thereby sharply reducing the quantity of discharged food waste. Such a food waste disposal apparatus is known from WO 2005/061134 A.

This food waste disposal apparatus, as attached to the kitchen sink or freestanding, includes a charge port into which the food waste is charged, a dehydrating and cutting unit for dehydrating the food waste by compression and cutting the food waste into pieces, a transfer unit for transferring in one direction the dehydrated and cut food waste, a drier for uniformly mixing and distributing the food waste dehydrated and cut by means of a rotating screw turned in one direction by a motor and for removing moisture from the food waste by means of high-temperature heat to thereby dry the food waste, and a discharge box into which the dried food waste is discharged and stored.

Meanwhile, the food waste, from which the drier has completely removed residual moisture using the high-temperature heat, is all discharged through a discharge port passing through a floor of the drier. Then, new food waste dehydrated and cut by the dehydrating and cutting unit is charged again into the drier from which all the food waste was previously discharged, and is dried.

However, in the case in which a large quantity of starch or moisture is contained in the food waste charged into the drier, the food waste agitated and crushed by the rotating screw has high viscosity, so that it has a high possibility of becoming attached to an inner wall or corners of the drier or the rotating screw.

In this case, a heat transfer coefficient of the heat transmitted from the inner wall to the interior of the drier is degraded by the food waste which is excessively attached to the inner wall of the drier. For this reason, the efficiency of drying the food waste is reduced, so that the crushing efficiency of the food waste in the drier is also reduced, thereby rendering it difficult to transfer the food waste.

In particular, the food waste frequently becomes attached around a crushing region of the drier due to the pressure caused by the rotation of the rotating screw. In this case, the motor can be overloaded causing damage, and the rotating screw can be damaged by the attached food waste.

Further, the food waste can be pushed by the rotating screw, and be discharged to the outside through the charge port. In the case in which the food waste is attached to the inner wall of the drier, the motor is overloaded when the rotating screw is rotated.

### SUMMARY OF THE INVENTION

The problem of the invention is a drier for a food waste disposal system having a high efficiency of drying and crushing the food waste and avoiding damage of the motor and the rotating screw.

This problem is solved by the drier for a food waste disposal system according to claim 1.

Due to the crusher the food waste can be prevented from becoming stuck adjacent to a crusher when an agitating screw is operated, which facilitates transferring the food waste, which is equipped with the agitating screw having at least one rotating thread such that overload is not applied to a motor when it is rotated, and which improves crushing performance by easily crushing and transferring the food waste.

In an embodiment of the present invention, the rotating threads may be spaced apart from each other, and include crooked ends so as to face each other.

In another embodiment of the present invention, the rotating threads may be removably mounted on the rotating shaft.

In another embodiment of the present invention, the drier may further includes a crusher having a circular crush plate that is installed on a second end of in an inner space of the drum in which the motor is coupled with the agitating screw and that has a plurality of inclined crushing blades in a radial direction, and an arcuate crush plate support which is installed around an upper portion of the crush plate.

In another embodiment of the present invention, the crush plate support may include a circular plate member surrounding the crush plate, and rib members protruding from an outer surface of the plate member in a radial direction.

In another embodiment of the present invention, the drum may include a plurality of ridges on an inner surface thereof which extends in an axial direction.

In another embodiment of the present invention, the drum may include a plurality of knobs on an inner surface thereof which protrudes at a predetermined height in an inward radial direction.

In another embodiment of the present invention, the ridges may be symmetrically disposed on left and right sides centering on a bottom of the drum.

According to embodiments of the present invention, the drier for a food waste disposal system prevents the food waste from becoming stuck adjacent to the crusher when the agitating screw is operated, and avoids accumulation of the food waste when the rotating thread of the agitating screw is rotated, so that it can prevent overload of the motor and damage to the agitating screw, etc. installed in the drier. Further, the drier prevents the food waste from easily sticking itself to the inner surface of the drum or the agitating screw, causes the stuck food waste to be separated from the inner surface of the drum or the agitating screw when the agitating screw is operated, so that transferring and crushing of the food waste can be facilitated.

### BRIEF DESCRIPTION OF THE DRAWINGS

The above and other objects, features and advantages of the present invention will be more clearly understood from the following detailed description when taken in conjunction with the accompanying drawings, in which:

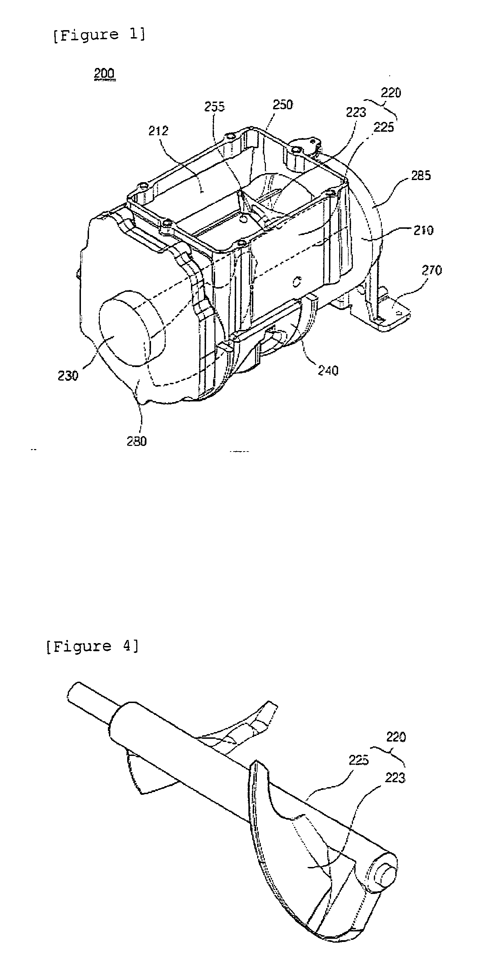

Fig. 1 is a right-side perspective view illustrating a drier for a food waste disposal system according to embodiment of the present invention;

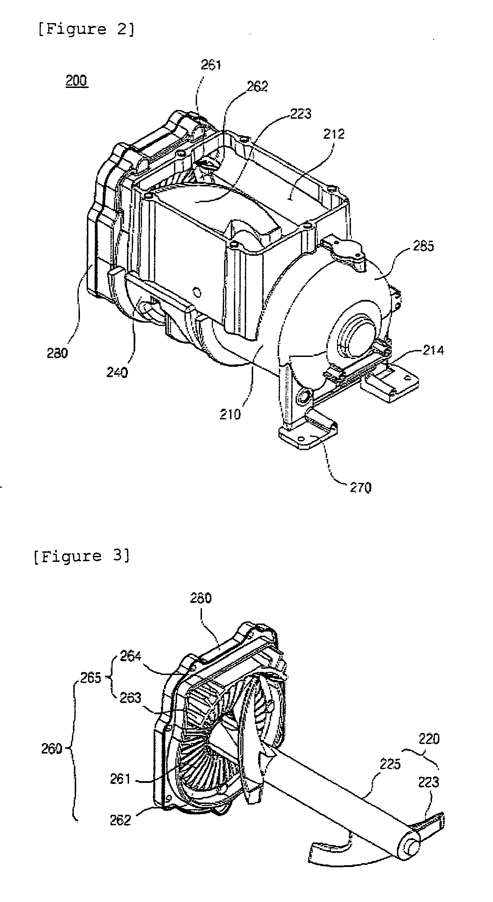

Fig. 2 is a left-side perspective view illustrating a drier for a food waste disposal system according to an embodiment of the present invention;
Fig. 3 is a perspective view illustrating an assembly of an agitating screw and a crusher installed in the drier for a food waste disposal system illustrated in Fig. 1; and
Fig. 4 is a perspective view illustrating the agitating screw of Fig. 3.

### DETAILED DESCRIPTION OF THE INVENTION

Reference will now be made in greater detail to exemplary embodiments of the invention with reference to the accompanying drawings.

The drier (200) for a food waste disposal system according to the present invention includes: a hollow drum (210) having a charge port (212) into which dehydrated food waste is charged and a discharge port (214) through which dried food waste is discharged; an agitating screw (220) having a plurality of hook-shaped rotating threads (223) which is rotatably disposed in an inner space of the drum (210) and agitates and crushes the dehydrated food waste charged into the drum (210), and a rotating shaft (225) around which the rotating threads (223) are disposed; a motor (230) installed on a first end of the drum (210) and providing a rotating force to the agitating screw (220); a crusher (260) having a circular crush plate (262) that is installed on the second end of the drum (210) in which the motor (230) is coupled with the agitating screw (220) and that has a plurality of inclined crushing blades (261) arranged radially, and an arcuate crush plate support (265) which is installed around an upper portion of the crush plate (262); and a heater (240) installed on an outer surface of the drum (210) and which when powered provides high-temperature heat for the inner space of the drum (210) thereby drying the food waste.

The agitating screw (220) is disposed in the inner space of the drum (210) so as to be rotatable in a forward or backward direction such that the food waste charged into the inner space through the charge port (212) of the drum (210) can be agitated and crushed.

The agitating screw (220) is a rotary member in which a plurality of or a single rotating thread (223) is mounted on the rod-like rotating shaft (225). One end of the rotating shaft (225) is coupled with the motor (230) installed on a front cap (280) at the first end of the drum (210), and the other end of the rotating shaft (225) is installed and supported in the shaft hole (not shown) of a rear cap (285) at the second end of the drum (210).

In this case, the inner surface of the drum (210) is spaced apart from the rotating thread (223) of the agitating screw (220) by a gap having a predetermined interval such that the rotating thread is rotated without interference.

Each rotating thread (223) has the shape of a hook, an end of which is crooked, is rotatably disposed in the inner space of the drum (210), and agitates and crushes the food waste charged into the drum (210). The rotating threads (223) are mounted on the rotating shaft (225).

The rotating threads (223) are spaced apart from each other such that the crooked ends thereof are opposite each other. To this end, in the state where the rotating thread (223) disposed around the rotating shaft (225) extends without interruption, its intermediate portion is removed. The ends of the rotating threads (223) are formed into a hook shape.

An outer edge of each rotating thread (223) rotated adjacent to the inner surface of the drum (210) is sharply formed so as to be able to crush the food waste.

Each rotating thread (223) can be removably mounted on the rotating shaft (225). Thus, when any rotating thread (223) is broken or bent, the rotation thread (223) is replaced so that the agitating screw (220) can be used for a long time.

The agitating screw (220) having these rotating threads (223) can prevent accumulation of the food waste when the rotating threads (223) are rotated as well as preventing overloading the motor (230).

In detail, a part of the food waste escapes between the rotating threads (223), and thus does not accumulate. The food waste is pulled into the drum (210) by the crooked ends of the rotating threads (223), so that the possibility of overloading the motor (230) is lowered.

## Claims

1. A drier for a food waste disposal system, comprising a hollow drum (210) having a charge port (212) into which dehydrated food waste can be charged and a discharge port (214) through which dried food waste can be discharged; an agitating screw (220) having at least one hook shaped, an end of which is crooked and an outer edge of which is sharply formed, which screw (220) is rotatably disposed in an inner space of the drum (210), which agitates and crushes the dehydrated food waste charged into the drum (210), and a rotating shaft (225) around which a rotating thread (223) is disposed; a motor (230) installed on a first end of the drum (210) and providing a rotating force to the agitating screw (220); wherein the motor (230) is coupled to the agitating screw (220); and a heater (240), installed on an outer surface of the drum which when powered provides high-temperature heat for the inner space of the drum thereby drying the food waste.

2. The drier as set forth in claim 1, wherein the rotating threads (223) are spaced from each other, and include crooked ends so as to face each other.

3. The drier as set forth in claim 1, wherein the rotating threads (223) are removably mounted on the rotating shaft (225).

4. The drier as set forth in claim 1, further comprising a crusher (260) having a circular crush plate (262) that is installed on a second end of an inner space of the drum (210) in which the motor (230) is coupled with the agitating screw (220) and which has a plurality of inclined crushing blades (261) arranged radially, and an arcuate crush plate support (265) which is installed around an upper portion of the crush plate (262).

5. The drier as set forth in claim 4, wherein the crush plate support (265) includes a circular plate member surrounding the crush plate (262), and rib members protruding from an outer surface of the plate member in a radial direction.

6. The drier as set forth in claim 1, wherein the drum (210) includes a plurality of ridges (250) on an inner surface thereof which extends in an axial direction.

7. The drier as set forth in claim 6, wherein the drum (210) further includes a plurality of knobs (255) on the inner surface thereof which protrudes at a predetermined height in an inward radial direction.

8. The drier as set forth in claim 6, wherein the ridges (250) are symmectrically disposed on left and right sides centering on a bottom of the drum (210).
